# EUROPÄISCHE PATENTSCHRIFT

(11) **EP 2 813 388 B1**
(45) Veröffentlichungstag und Bekanntmachung des Hinweises auf die Patenterteilung: **01.02.2017**
(21) Anmeldenummer: 14179870.2
(22) Anmeldetag: 11.06.2012
(51) Int. Cl.: B60K 35/00, B62D 15/02, B60R 1/00, H04N 7/18

(54) **Verfahren und Vorrichtung zum Einparken eines Fahrzeugs**
Method and device for parking a vehicle
Procédé et dispositif destinés au stationnement d'un véhicule

(30) Priorität: 28.06.2011 DE 102011105884
(43) Veröffentlichungstag der Anmeldung: 17.12.2014
(62) Teilanmeldung aus: 12728034.5
(73) Patentinhaber: Volkswagen Aktiengesellschaft, 38440 Wolfsburg (DE)
(72) Erfinder: Lambert, Dr. Georg, 38442 Wolfsburg (DE); Eckert, Dr. Gerald, 31275 Lehrte (DE)

(56) Entgegenhaltungen:
- EP-A2- 1 231 110
- EP-A2- 1 288 072
- WO-A1-2009/036176
- JP-A- 2004 009 959
- JP-A- 2004 147 083
- JP-A- 2005 045 602

## Beschreibung

Die Erfindung betrifft ein Verfahren und eine Vorrichtung zum Einparken eines mit einem Rückfahrkamerasystem versehenen Kraftfahrzeugs gemäß dem Oberbegriff des Anspruchs 1 und des Anspruchs 2.

Zur Erhöhung der Sicherheit im Straßenverkehr und des Fahrkomforts werden verstärkt Fahrerassistenzsysteme eingesetzt, die den Fahrer bei seinen Aufgaben unterstützten und/oder bestimmte Fahrfunktionen teilweise oder vollständig übernehmen. Bekannteste Beispiele dafür sind das ABS (Antiblockiersystem) und ESP (Elektronisches Stabilitätsprogramm). Ferner sind Systeme bekannt, die den Fahrer beim Ein- oder Ausparken eines Kraftfahrzeugs in und aus einer Parklücke unterstützen, wobei im einfachsten Fall eine Abstandsmessung zu Hindernissen basierend auf Ultraschall erfolgt und eine Abstandswarnung dem Fahrer den Abstand zu Hindernissen beispielsweise akustisch signalisiert.

In der nächsten Ausbaustufe wird dem Fahrer anstelle oder zusätzlich zur akustischen Ausgabe eine graphische Darstellung des durch eine geeignete Umfeldsensorik aufgenommenen Umfelds eines Kraftfahrzeugs angeboten. Die graphische Darstellung des Kraftfahrzeugumfeldes erleichtert dem Fahrer ein Ein- oder Ausparkmanöver.

Zum Einsatz gelangen hier insbesondere für ein rückwärtiges Einparkmanöver Rückfahrkameras, die bei einer Rückwärtsfahrt eines Kraftfahrzeugs das rückwärtige Umfeld des Fahrzeugs überwachen und ein Bild des Umfeldes einem Fahrerdisplay zuführen, so dass der Fahrer ein reales Abbild des rückwärtigen Umfeldes seines Kraftfahrzeugs in Echtzeit zur Verfügung hat.

So ist das Fahrzeug Lexus 460 des Jahrgangs 2007 mit einem Parkleitsystem (Advanced Parking Guidance System) ausgerüstet, welches den Fahrer bei einem Einparkvorgang unterstützt, indem ein Bild des Rückraums des Fahrzeugs als Referenz für den rückwärtigen Einparkvorgang in eine Längsparklücke auf einem Display dargestellt wird, wobei eine Steuerung der Lenkung durchgeführt wird, wenn in einer auf dem Display festgelegten Zielposition eingeparkt werden soll. Dabei übernimmt das System nur die Steuerung des Lenkwinkels, die Kontrolle über die Rückwärtsfahrt und deren Geschwindigkeit obliegt weiterhin dem Fahrer.

Um den durch das Parkleitsystem unterstützten Einparkvorgang einzuleiten, muss der Fahrer das Kraftfahrzeug in eine zum Einparken in eine Längsparklücke geeignete Ausgangsposition manövrieren, wobei das System zum Auffinden der günstigen Position keine Hilfestellung anbietet. Nach dem Einlegen des Rückwärtsgangs und dem Berühren einer Aktivierungstaste auf dem Display wird das Parkleitsystem initialisiert und ein Parkrahmen in der möglichen Parklücke angezeigt, wobei der Fahrer mittels auf dem Display dargestellter Bewegungspfeile den Parkrahmen in der Parklücke ausrichten kann. Erscheint der Parkrahmen in der Farbe "Grün", so kann das Parkleitsystem den Parkrahmen erreichen, d.h. der Parkrahmen ist zulässig. Erscheint der eingeblendete Parkrahmen in der Farbe "Rot", so kann der Parkrahmen aus der gewählten Ausgangsposition nicht erreicht werden und der Fahrer muss eine andere Ausgangsposition anfahren. Um den Einparkvorgang in den grünen Parkrahmen einzuleiten, muss der Fahrer den gewählten Parkrahmen bestätigen und dazu eine weitere Taste auf dem Bildschirm betätigen. Anschließend steuert das Parkleitsystem das Fahrzeug in die Parklücke, wobei der Fahrer die Geschwindigkeit regelt. Sollte die Geschwindigkeit zu hoch sein, gibt das System eine Warnung aus. Falls der Fahrer dann die Geschwindigkeit nicht verringert, wird die Assistenz beendet.

Das bekannte Parkleitsystem ist auch in der Lage in Querparklücken einzuparken. Allerdings wird auch in diesem Fall die Wahl der Ausgangsposition nicht direkt unterstützt, sondern erst wenn der Fahrer den Parkrahmen in die mögliche Parklücke zu platzieren versucht, erkennt das System, ob die Querparklücke zulässig ist.

Nachteilig ist, dass das bekannte Parkleitsystem nur in geringem Umfang intuitiv ist, wobei dies insbesondere für die Wahl der Ausgangsposition gilt. Eine zu hohe Komplexität führt zu Systemanzeigen, die dem gewünschten Fahrmanöver nicht entsprechen, wodurch der Fahrer verwirrt wird. Die vom Fahrer erwünschten Fahraktionen sind unklar und die Hilfsgrafiken wechseln überraschend. Es kann vorkommen, dass der Systemzustand dem Fahrerwunsch nicht entspricht, was insbesondere dann passiert, wenn der Fahrer nicht der Ideallinie folgt, sondern mehrfach hin und her manövriert.

Die Druckschrift EP 1 231 110 A2 ist als nächstliegender Stand der Technik nach dem Oberbegriff des Anspruchs 1 zu sehnen betrifft eine Vorrichtung zum Synthetisieren von virtuellen Bildern zur Darstellung auf einem Display eines Kraftfahrzeugs, wobei ein Umgebungsbild der Umgebung des Kraftfahrzeugs von einer Vielzahl entsprechender Bildaufnahmeeinrichtungen synthetisiert wird und in das synthetisierte Umgebungsbild der Fahrschlauch des Kraftfahrzeugs eingeblendet wird, um das rückwärtige Einparken des Kraftfahrzeugs zu erleichtern. Dabei wird der Fahrschlauch zum rückwärtigen Einparken in der Form zweier auf der Fahrbahnebene befindlicher Lenkwinkeltrajektorien, darüber angeordneter Trajektorien der äußeren Stoßstangenecken sowie Trajektorien der Fahrzeughöhenbegrenzungen eingeblendet. Ferner ist im dargestellten Fahrschlauch ein mit dem Fahrschlauch gekoppeltes Abstandsraster eingeblendet.

Die Druckschrift JP 2005045602 A zeigt ein Umfelderfassungssystem für ein Kraftfahrzeug, bei dem Bildinformation über das Umfeld des Kraftfahrzeugs auf einem Monitor dargestellt und Hindernisse im Umfeld aufgezeigt werden. Ferner kann der durch den Lenkwinkel vorgegebene Fahrschlauch der Fahrzeugbewegung durch in das Umfeldbild eingeblendete seitliche 3D-Symbole dargestellt werden, die senkrecht stehend auf der Fahrbahnoberfläche angeordnet sind. Ferner kann ein Abstandsraster in die den Fahrschlauch anzeigenden 3D-Symbole eingeblendet werden, wobei das Abstandsraster mit dem Fahrschlauch gekoppelt ist.

Die Druckschrift EP 1 288 072 A2 betrifft eine Einparkhilfe zum Unterstützen eines rückwärtigen Einparkvorgangs eines Kraftfahrzeugs in eine Querparklücke gemäß dem Oberbegriff des Anspruchs 1. Dabei wird das Bild des rückwärtigen Umfeldes des Kraftfahrzeugs auf einem Display dargestellt, wobei während des rückwärtigen Einparkvorgangs der durch den Lenkwinkel bestimmte Fahrschlauch durch eine 3D-Darstellung für den Fahrer sichtbar dargestellt wird. Ferner wird ein Abstandsraster in dem Fahrschlauch eingeblendet, wobei das Abstandsraster mit dem Fahrschlauch fest verbunden ist.

Der Erfindung liegt daher die Aufgabe zugrunde, ein Verfahren und eine Vorrichtung zum Einparken eines Kraftfahrzeugs in eine Querparklücke zu schaffen, das den Fahrer des Kraftfahrzeugs in einfacher und übersichtlicher Weise beim Einparken in eine Parklücke unterstützt.

Diese Aufgabe wird durch ein Verfahren mit den Merkmalen des Anspruchs 1 sowie durch eine Vorrichtung mit den Merkmalen des Anspruchs 2 gelöst.

Bei dem erfindungsgemäßen Verfahren zum Unterstützen eines rückwärtigen Einparkvorgangs eines mit einem Rückfahrkamerasystem ausgestatteten Kraftfahrzeugs in eine Querparklücke, wobei das Bild des rückwärtigen Umfeldes des Kraftfahrzeugs auf einer Anzeigeeinrichtung des Kraftfahrzeugs dargestellt wird, wird während des rückwärtigen Einparkvorgangs der durch den Lenkwinkel bestimmte Fahrschlauch durch zwei in das Bild des rückwärtigen Umfeldes des Kraftfahrzeugs eingeblendete 3D-Symbole in der Form von transparenten 3D-Leitplanken dargestellt.

Durch die Visualisierung des Fahrschlauches durch beispielsweise die genannten 3D-Leitplanken wird dem Fahrer des Kraftfahrzeugs der rückwärtige Einparkvorgang in eine Querparklücke auf einfache Weise symbolisch in Echtzeit im rückwärtigen Bild dargestellt, wodurch mögliche Kollisionsgefahren frühzeitig erkannt werden können. Dabei ist der eingeblendete Fahrschlauch unmittelbar vom aktuellen Lenkwinkel abhängig.

Ferner wird zusätzlich zu den 3D-Symbolen ein Abstandsraster in das rückwärtige Bild des Umfeldes des Kraftfahrzeugs, d.h. die rückwärtige Querparklückensituation, eingeblendet, was den Fahrer beim Ausrichten des Kraftfahrzeugs unterstützt. Dabei ist das in das rückwärtige Bild eingeblendete Abstandraster fest mit dem Fahrzeugkoordinatensystem verbunden, folgt während des Einparkvorgangs den 3D-Leitplanken nicht und ist unabhängig vom Fahrschlauch.

Ferner dient die dem Fahrzeug nächstgelegene Linie des Abstandsrasters als Stopplinie zum Stoppen des Einparkvorgangs.

Eine erfindungsgemäße Vorrichtung zur Durchführung des Verfahrens zum Einparken eines Kraftfahrzeugs in eine Querparklücke, welche ein Rückfahrkamerasystem und eine Anzeige zur Darstellung des von dem Rückfahrkamerasystem aufgenommenen Bildes des rückwärtigen Umfelds des Kraftfahrzeugs umfasst, weist eine Einrichtung zur Erzeugung und Einblendung von 3D-Symbole in das Bild des rückwärtigen Kraftfahrzeugumfeldes auf, wobei die 3D-Symbole den Fahrschlauch des Kraftfahrzeugs während des Einparkvorgangs darstellen. Auch hier werden als 3D-Symbole 3D-Leitplankensymbole verwendet.

Ferner weist die Vorrichtung zum Einparken in Querparklücken eine Einrichtung zur Erzeugung und Einblendung weiterer Hilfslinien zur Unterstützung des Fahrers während des Einparkvorgangs in das Bild des rückwärtigen Kraftfahrzeugumfeldes auf, wobei die Hilfslinien eine Abstandraster bilden, welches fest mit dem Fahrzeugkoordinatensystem verbunden ist.

Dabei werden die zwei 3D-Symbole in Form von transparenten 3D-Leitplanken zur Darstellung des lenkwinkelabhängigen Fahrschlauchs in das rückwärtige Bild eingeblendet, das in das rückwärtige Bild eingeblendete Abstandsraster ist fest mit dem Fahrzeugkoordinatensystem verbunden, wobei während des Einparkvorgangs das Abstandsraster den 3D-Leitplanken nicht folgt und unabhängig vom Fahrschlauch ist, und die dem Fahrzeug nächstgelegene Hilfslinie des Abstandsrasters dient als Stopplinie zum Stoppen des Einparkvorgangs.

Bevorzugte Ausführungsformen werden im Folgenden anhand der Zeichnungen erläutert. Dabei zeigt
- Fig.1: Anfahren einer Querparklücke mit Unterstützung,
- Fig.2: Einfahren in die Querparklücke.
- Fig.3: Ausrichten des Abstandsraster in der Querparklücke, und
- Fig.4: Ausrichten des Fahrzeugs an der Querparklückenbegrenzung.

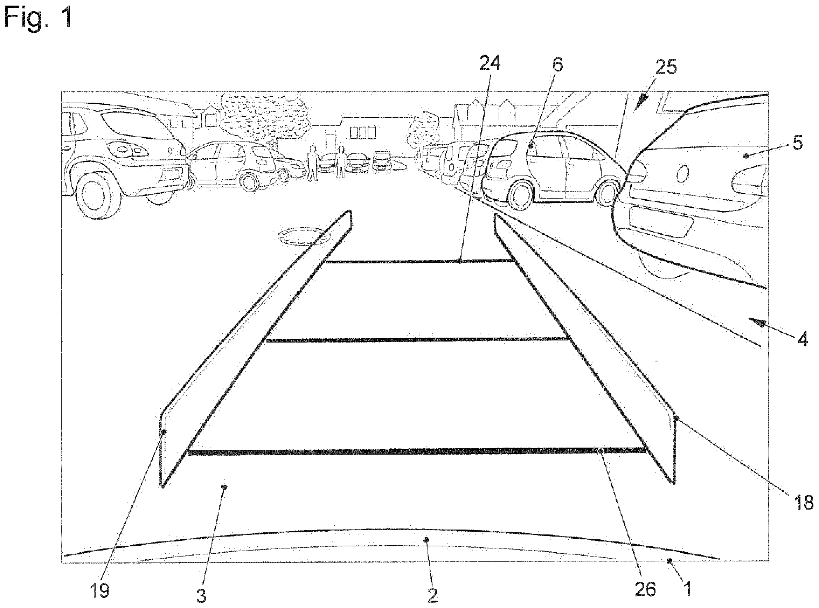

Die Fig. 1 zeigt eine typische Situation für ein rückwärtiges Einparken in eine Querparklücke. Auf einem Display 1 ist das Bild einer Rückfahrkamera (nicht dargestellt) zu sehen, wobei das rückwärtige Ende 2 des einzuparkenden Fahrzeugs im Display 1 dargestellt ist, um dem Fahrer ein Gefühl für die tatsächlichen Begebenheiten zu vermitteln. Im rückwärtige Bild in Echtzeit ist die Fahrbahn 3 zu erkennen, wobei sich auf der Fahrerseite ein Parkstreifen 4 befindet, auf dem ein erstes Fahrzeug 5 sowie ein zweites Fahrzeug 6 befindet, Zwischen dem ersten und dem zweiten Fahrzeug 5, 6 ist eine Querparklücke 25 erkennbar. Zur Unterstützung des Fahrers bei dem Einparkvorgang in die Querparklücke 25 werden in das rückwärtige Bild der realen Einparksituation zwei den Fahrschlauch begrenzende 3D-Objekte, hier in der Form von 3D-Leitplanken 18, 19, in transparenter Weise eingeblendet, wobei die 3D-Objekte mit dem Koordinatensystem des Fahrzeugs gekoppelt sind. Dabei ist der durch die 3D-Leitplanken bestimmte Fahrschlauch eine Funktion des Fahrzeugs sowie des Lenkwinkels. Ferner ist die Länge der 3D-Leitplanken vorgegeben. Zur weiteren Unterstützung des Fahrers sind weitere Hilfslinien in Form eines Abstandsrasters 24 eingeblendet, wobei die dem Fahrzeug nächstgelegene Linie 26 des Abstandsrasters 24 als Stopplinie dient.

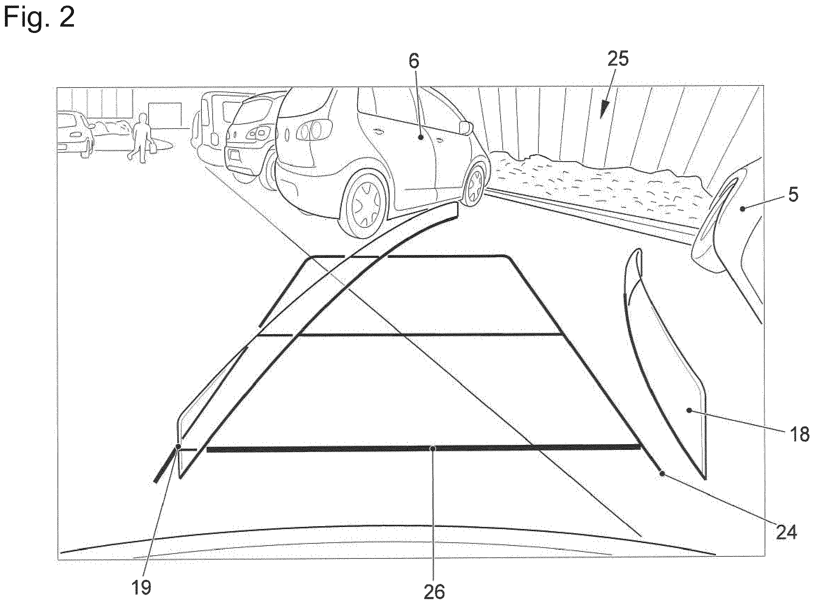

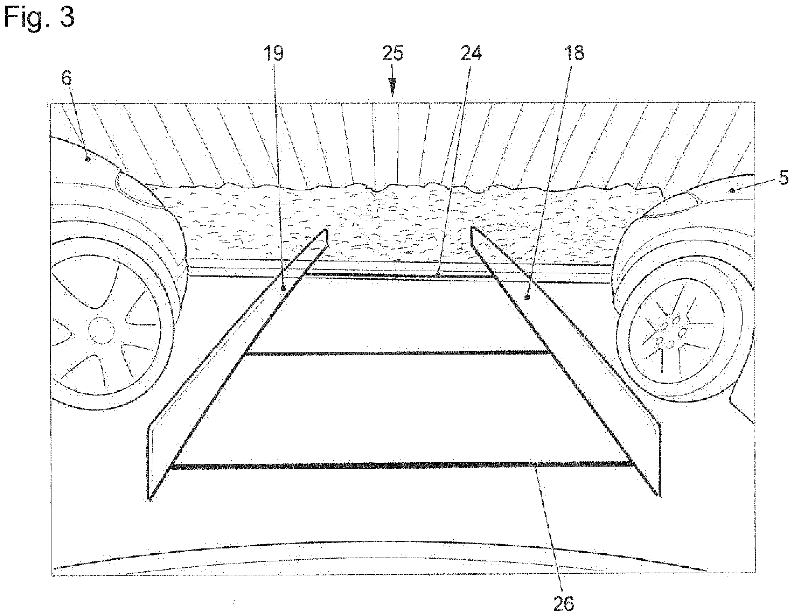

Fig. 2 zeigt die Situation beim Einfahren in die Querparklücke. Es ist für den Fahrer aus der Einblendung der 3D-Leitplanken 18, 19 in das Bild der realen Querparklücke, dass der eingeschlagene Lenkwinkel in die Querparklücke 25 führt, ohne dass die Gefahr einer Kollision mit den parkenden Fahrzeugen 5 oder 6 besteht. Das Einparkraster 24 folgt nicht den 3D-Leitplanken 18, 19, da es fest mit dem Fahrzeugkoordinatensystem verbunden ist. Fig. 3 zeigt die Situation nach dem Eintauchen des einzuparkenden Fahrzeugs in die Querparklücke. Durch die eingeblendeten 3D-Leitplanken 18, 19 und das Abstandsraster 24 wird dem Fahrer visuell vermittelt, dass die Querparklücke 25 ausreichend groß ist, um das einzuparkende Fahrzeug einzuparken und auszurichten.

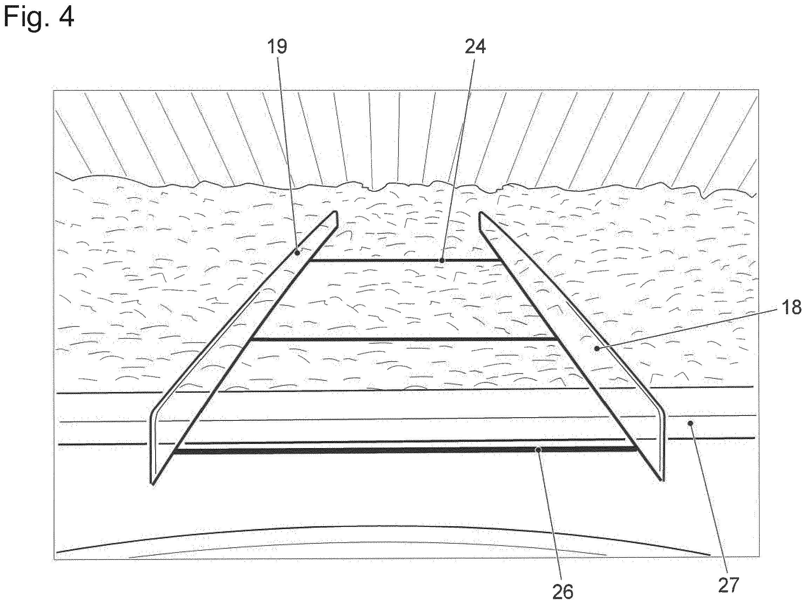

Fig. 4 zeigt schließlich das Ausrichten des Fahrzeugs an dem das Ende der Querparklücke 25 definierenden Bordstein 27 mittels der Stopplinie 26.

### Bezugszeichenliste

- 1: Display
- 2: Fahrzeugheck
- 3: Fahrbahn
- 4: Parkspur
- 5: vorderes parkendes Fahrzeug
- 6: hinteres parkendes Fahrzeug
- 18: 3D-Leitplanke
- 19: 3D-Leitplanke
- 24: Abstandsraster
- 25: Querparklücke
- 26: Stopplinie
- 27: Bordstein

## Patentansprüche

1. Verfahren zum Unterstützen eines rückwärtigen Einparkvorgangs eines mit einem Rückfahrkamerasystem ausgestatteten Kraftfahrzeugs in eine Querparklücke, wobei das Bild des rückwärtigen Umfeldes des Kraftfahrzeugs auf einem Display des Kraftfahrzeugs dargestellt wird, wobei während des rückwärtigen Einparkvorgangs der durch den Lenkwinkel bestimmte Fahrschlauch durch einen in das Bild des rückwärtigen Umfeldes des Kraftfahrzeugs eingeblendeten 3D-Rahmen dargestellt wird, wobei zusätzlich zur Unterstützung des Fahrers beim Ausrichten des Kraftfahrzeugs weitere Hilfslinien (24, 26) in Form eines Abstandsrasters eingeblendet werden,
**dadurch gekennzeichnet, dass**
der durch den 3D-Rahmen dargestellte unmittelbar lenkwinkelabhängige Fahrschlauch durch zwei 3D-Symbole in Form von transparenten 3D-Leitplanken (18, 19) gebildet wird, die in das Bild des rückwärtigen Umfeldes eingeblendet werden, das in das rückwärtige Bild eingeblendete Abstandraster (24) fest mit dem Fahrzeugkoordinatensystem verbunden ist, wobei das Abstandsraster (24) während des Einparkvorgangs den 3D-Leitplanken nicht folgt und unabhängig vom Fahrschlauch ist, und
die dem Fahrzeug nächstgelegene Linie 26 des Abstandsrasters 24 als Stopplinie zum Stoppen des Einparkvorgangs dient.

2. Vorrichtung zur Durchführung des Verfahrens nach Anspruch 1 oder 2 zum Einparken eines Kraftfahrzeugs in eine Querparklücke (25), mit einem Rückfahrkamerasystem und einer Anzeige (1) zur Darstellung des von dem Rückfahrkamerasystem aufgenommenen Bildes des rückwärtigen Umfelds des Kraftfahrzeugs, wobei die Vorrichtung eine Einrichtung zur Erzeugung und Einblendung von 3D-Symbolen (18, 19) in das Bild des rückwärtigen Kraftfahrzeugumfeldes aufweist, wobei die 3D-Symbole den Fahrschlauch des Kraftfahrzeugs während des Einparkvorgangs darstellen und wobei die Vorrichtung eine Einrichtung zur Erzeugung und Einblendung weiterer Hilfslinien (24, 26) in Form eines Abstandsrasters zur Unterstützung des Fahrers während des Einparkvorgangs in das Bild des rückwärtigen Kraftfahrzeugumfeldes aufweist,
**dadurch gekennzeichnet, dass**
zwei 3D-Symbole in Form von transparenten 3D-Leitplanken zur Darstellung des lenkwinkelabhängigen Fahrschlauchs in das rückwärtige Bild eingeblendet werden, das in das rückwärtige Bild eingeblendete Abstandsraster (24) fest mit dem Fahrzeugkoordinatensystem verbunden ist, wobei während des Einparkvorgangs das Abstandsraster (24) den 3D-Leitplanken nicht folgt und unabhängig vom Fahrschlauch ist, und
die dem Fahrzeug nächstgelegene Hilfslinie (26) des Abstandsrasters (24) als Stopplinie zum Stoppen des Einparkvorgangs dient.

## Claims

1. Method for assisting a reverse parking process of a motor vehicle equipped with a rear-view camera system into a transverse parking space, wherein the image of the surroundings to the rear of the motor vehicle is displayed on a display device of the motor vehicle, wherein during the reverse parking process the driving tube which is determined by the steering angle is displayed by a 3D frame blended into the image of the surroundings to the rear of the motor vehicle, wherein further auxiliary lines (24, 26) in the form of a distance grid are additionally blended in so as to help the driver orient the motor vehicle,
**characterized in that**
the driving tube directly dependent on the steering angle and displayed by the 3D frame is formed by two 3D symbols in the form of transparent 3D guide rails (18, 19) which are blended into the image of the surroundings to the rear of the motor vehicle,
the distance grid (24) blended into the rear view image is permanently connected to the vehicle coordinates system, wherein the distance grid (24) during the parking process does not follow the 3D guide rails and is independent of the driving tube, and
the line (26) of the distance grid (24) located closest to the vehicle serves as a stop line for stopping the parking process.

2. Device for carrying out the method according to Claim 1 or 2 for parking a motor vehicle in a transverse parking space (25), having a rear-view camera system and a display (1) for displaying the image of the surroundings to the rear of the motor vehicle taken by the rear-view camera system, wherein the device has a means for generating and blending 3D symbols (18, 19) into the image of the surroundings to the rear of the motor vehicle, wherein the 3D symbols display the driving tube of the motor vehicle during the parking process, and wherein the device has a means for generating and blending further auxiliary lines (24, 26), in the form of a distance grid for assisting the driver during the parking process, into the image of the surroundings to the rear of the vehicle, **characterized in that**
two 3D symbols in the form of transparent 3D guide rails for displaying the driving tube dependent on the steering angle are blended into the rear view image,
the distance grid (24) blended into the rear view image is permanently connected to the vehicle coordinates system, wherein the distance grid (24) during the parking process does not follow the 3D guide rails and is independent of the driving tube, and
the line (26) of the distance grid (24) located closest to the vehicle serves as a stop line for stopping the parking process.

## Revendications

1. Procédé d'assistance à une manoeuvre de stationnement en marche arrière d'un véhicule à moteur équipé d'un système de caméra de recul, dans un emplacement de stationnement en créneau, dans lequel l'image de l'environnement arrière du véhicule à moteur est représentée sur un afficheur du véhicule à moteur, dans lequel, pendant la manoeuvre de stationnement en marche arrière, la trajectoire déterminée par l'angle de braquage est représentée par un cadre 3D incorporé à l'image de l'environnement arrière du véhicule à moteur, dans lequel, en plus de l'assistance au conducteur, lors de l'orientation du véhicule à moteur, d'autre lignes d'assistance (24, 26) sont incorporées sous la forme d'un quadrillage de distance,
**caractérisé en ce que** la trajectoire dépendant directement de l'angle de braquage et représentée par le cadre 3D est formée par deux symboles 3D, sous la forme de glissières de sécurité 3D transparents (18, 19), qui sont incorporés à l'image de l'environnement arrière, le quadrillage de distance (24) incorporé à l'image arrière est lié de manière fixe au système de coordonnées du véhicule, dans lequel, pendant la manoeuvre de stationnement, le quadrillage de distance (24) ne suit pas les glissières de sécurité 3D et est indépendant de la trajectoire, et
la ligne (26) du quadrillage de distance (24) la plus proche du véhicule est utilisée en tant que ligne d'arrêt pour l'arrêt de la manoeuvre de stationnement.

2. Dispositif de destiné à mettre en oeuvre le procédé selon la revendication 1 ou 2 pour le stationnement d'un véhicule à moteur dans un emplacement de stationnement en créneau (25), comportant un système de caméra de recul et un afficheur (1) destiné à représenter l'image acquise par le système de caméra de recul de l'environnement arrière du véhicule à moteur, dans lequel le dispositif comporte un moyen permettant de générer et d'incorporer des symboles 3D (18, 19) à l'image de l'environnement arrière du véhicule à moteur, dans lequel les symboles 3D représentent la trajectoire du véhicule à moteur pendant la manoeuvre de stationnement et dans lequel le dispositif comporte un moyen destiné à générer et incorporer d'autres lignes d'assistance (24, 26), sous la forme d'un quadrillage de distance destiné à assister le conducteur pendant la manoeuvre de stationnement, à l'image de l'environnement arrière du véhicule à moteur,
**caractérisé en ce que** deux symboles 3D, sous la forme de rails de sécurité 3D transparents, sont incorporés à l'image arrière pour représenter la trajectoire en fonction de l'angle de braquage, le quadrillage de distance (24) incorporé à l'image arrière est lié de manière fixe au système de coordonnées du véhicule, dans lequel le quadrillage de distance (24), pendant la manoeuvre de stationnement, ne suit pas les rails de sécurité 3D et est indépendant de la trajectoire, et
la ligne d'assistance (26) du quadrillage de distance (24) la plus proche du véhicule est utilisée en tant que ligne d'arrêt destinée à arrêter la manoeuvre de stationnement.
